# EUROPÄISCHE PATENTANMELDUNG

(11) **EP 2 037 132 A2**
(43) Veröffentlichungstag der Anmeldung: **18.03.2009**
(21) Anmeldenummer: 08015748.0
(22) Anmeldetag: 06.09.2008
(51) Int. Cl.: F16B 45/02

(54) **Einhängehaken**

(30) Priorität: 12.09.2007 DE 102007045048
(71) Anmelder: BOS GmbH & Co. KG, 73760 Ostfildern (DE)
(72) Erfinder: Seeg, Thomas, 73760 Ostfildern (DE)
(74) Vertreter: Patentanwälte Ruff, Wilhelm, Beier, Dauster & Partner

(57) **Zusammenfassung**

Einhängehaken mit einem vollständig oder annähernd vollständig schließbaren Haltebügel (18, 34), der in einem Schließzustand einen Innenbereich des Einhängehakens umschließt, umfassend ein erstes Hakenbauteil (10) mit einem Hauptabschnitt (18) des Haltebügels, ein zweiten Hakenbauteil (30) mit einem Schließabschnitt (34) des Haltebügels und ein Befestigungsmittel (40) zum Verbinden des Einhängehakens mit einem Zugmittel (70), wobei die beiden Hakenbauteile (10, 30) gegeneinander zwischen einer Öffnungsstellung und der Schließstellung relativbeweglich sind, wobei ein Ende (20) des Hauptabschnitts (18) und ein Ende (36) des Schließabschnitts (34) in der Schließstellung in Anlage aneinander gelangen, und wobei der Hauptabschnitt (18) einen Anlagebereich (24) aufweist, an dem ein vom Bügel (18, 34) umfasster Einhängeabschnitt (80) anliegt, wenn der Einhängehaken mittels des Zugmittels (70) zugkraftbeaufschlagt wird.

Erfindungsgemäß sind Formschlussmittel (22, 38) am Ende (20) des Hauptabschnitts (18) und am Ende (34) des Schließabschnitts (30) vorgesehen, die in der Schließstellung zumindest hinsichtlich der Richtung der Zugkraftbeaufschlagung formschlüssig ineinander greifen.

Verwendung zur Schaffung eines stabilen Einhängehakens.

## Beschreibung

### Anwendungsgebiet und Stand der Technik

Die Erfindung betrifft einen Einhängehaken mit einem vollständig oder annähernd vollständig schließbaren Haltebügel, der in einem Schließzustand einen Innenbereich des Einhängehakens umschließt, wobei dieser Haltebügel ein erstes Hakenbauteil mit einem Hauptabschnitt des Haltebügels, ein zweites Hakenbauteil mit einem Schließabschnitt des Haltebügels und ein Befestigungsmittel zum Verbinden des Einhängehakens mit einem Zugmittel umfasst, wobei die beiden Hakenbauteile gegeneinander zwischen einer Öffnungsstellung und der Schließstellung relativbeweglich sind, wobei ein Ende des Hauptabschnitts und ein Ende des Schließabschnitts in der Schließstellung in Anlage aneinander gelangen und wobei der Hauptabschnitt einen Anlagebereich aufweist, an dem ein vom Bügel umfasster Einhängeabschnitt anliegt, wenn der Einhängehaken mittels des Zugmittels zugkraftbeaufschlagt wird.

Derartige Einhängehaken werden verwendet, um ein Zugmittel, beispielsweise einen Gurt oder ein Seil, mit einer Befestigungsvorrichtung, beispielsweise einer Öse, zu verbinden. Ein üblicher gattungsgemäßer Einhängehaken ist beispielsweise der Karabinerhaken. Dieser weist üblicherweise zwei Abschnitte auf, die in einem geschlossenen Zustand einen Innenbereich vollständig umschließen und somit zum sicheren Einklinken eines Zugmittels in eine Befestigungseinrichtung dienen können. Die beiden Abschnitte sind üblicherweise ein Hauptbestandteil, der zwischen 200 und 300° des Innenbereichs umschließt, und ein Schließabschnitt, der im geschlossenen Zustand die freien Enden des Hauptabschnitts miteinander verbindet. Im Innenbereich ist in einem Abschnitt, der dem Befestigungsmittel abgewandt ist, eine Anlagefläche vorgesehen, an der die Befestigungseinrichtung, in die der Karabinerhaken eingeklinkt ist, in einem Verwendungszustand des Einhängehakens anliegt. Der Schließabschnitt ist im einfachsten Fall an einem Ende des Hauptabschnitts schwenkbeweglich angelenkt und kann um die entsprechende Schwenkachse nach innen in den Innenbereich verschwenkt werden, um einen Öffnungszustand des Karabinerhakens herzustellen, in dem dieser eingeklinkt werden kann. Andere Alternativen sehen vor, dass der Schließabschnitt translativ an einem Ende des Hauptabschnitts gelagert ist und am anderen Ende des Hauptabschnitts verschraubt werden kann, um den Schließzustand herzustellen.

Aus der US 1,010,952 ist ein Haken bekannt, der unter Zugbelastung automatisch geschlossen wird.

### Aufgabe und Lösung

Aufgabe der Erfindung ist es, einen gattungsgemäßen Einhängehaken bezüglich seiner Funktionssicherheit und seiner Handhabbarkeit zu verbessern.

Erfindungsgemäß wird die Aufgabe durch einen gattungsgemäßen Einhängehaken gelöst, der Formschlussmittel am Ende des Hauptabschnitts und am Ende des Schließabschnitts aufweist, die in der Schließstellung zumindest hinsichtlich der Richtung der Zugkraftbeaufschlagung formschlüssig ineinander greifen.

Die Kraft, die vom Zugmittel ausgeübt wird und in die Befestigungseinrichtung eingeleitet wird, in die der Einhängehaken eingehängt ist, kann durch diese Maßnahme sowohl über den Hauptabschnitt als auch über den Schließabschnitt übertragen werden. Es wird somit eine erheblich höhere Sicherheit erreicht und zudem verhindert, dass sich der Hauptabschnitt des Einhängehakens durch die Kraftbeaufschlagung verzieht.

Bei einer solchen Ausgestaltung mit Formschluss ist eine Ausprägung, derzufolge die Zugkraft des Zugmittels eine Kraft bzw. ein Moment in Richtung der Schließstellung bewirkt, besonders vorteilhaft, da hierdurch der Formschluss umso fester gehalten wird, je größer die Zugkraft am Zugmittel wird. Der Formschluss kann durch eine Vielzahl verschiedener Formgebungen erreicht werden. Als Formschlussmittel werden im Zusammenhang mit dieser Erfindung solche Gestaltungen verstanden, bei denen alleine durch die Relativbewegung des Schließabschnitts zum Hauptabschnitt in der Schließstellung der Formschluss erzielbar ist.

Besonders bevorzugt ist eine Ausgestaltung, bei der die Formschlussmittel eine Halteöse oder Halteausnehmung im Hauptabschnitt oder am Schließabschnitt und ein zum Eingreifen in die Halteöse oder die Halteausnehmung vorgesehenen Haltefortsatz am jeweils anderen Abschnitt aufweisen. Die Halteöse/Halteausnehmung und der Haltefortsatz sind dabei vorzugsweise so ausgebildet, dass der Haltefortsatz in einer Richtung orthogonal zur Zugkraftbeaufschlagung in die Halteöse/Halteausnehmung eingreift.

Bei einer Weiterbildung der Erfindung ist der Einhängehaken derart ausgebildet ist, dass die Hakenbauteile bei Zugkraftbeaufschlagung des Einhängehakens in ihre Schließstellung kraftbeaufschlagt und/oder momentbeaufschlagt werden.

Durch diese Gestaltung kann erreicht werden, dass der Einhängehaken eine zuverlässige Schließstellung dadurch erzielt, dass eine Zugkraft durch das Zugmittel auf das Befestigungsmittel ausgeübt wird. Beim Wegfall dieser Zugkraft kann der Einhängehaken unproblematisch geöffnet und dadurch aus der Befestigungseinrichtung, in die er zuvor eingehakt war, gelöst werden.

Vorzugsweise ist der Einhängehaken dabei so ausgebildet, dass die Kraft- und/oder Momentenbeaufschlagung in Richtung der Schließstellung umso größer wird, je größer die durch das Zugmittel ausgeübte Zugkraft ist. Durch diese Maßnahme wird der Einhängehaken bei steigender Belastung umso sicherer geschlossen. Dies stellt insbesondere eine bedarfsgerechte Ausgestaltung bei Einhängehaken dar, deren Enden im Schließzustand formschlüssig ineinander greifen, da ein Verlust des Formschlusses infolge großer Zugkräfte durch die entsprechend größere Kraft- und/oder Momentenbeaufschlagung des Schließabschnitts wirksam verhindert wird.

Bei einer Weiterbildung der Erfindung ist der Schließabschnitt des gattungsgemäßen Einhängehakens in Öffnungszustand außerhalb des Innbereichs des Einhängehakens angeordnet.

Anders als dies beispielsweise bei üblichen Karabinerhaken der Fall ist, kann hierdurch ein besonders bequemes Einhaken und Aushaken des Einhängehakens in eine Öse oder eine andere Befestigungseinrichtung erfolgen. Der Schließabschnitt kann weit aus der Lage heraus bewegt werden, in der er sich im Schließzustand befindet. Der dadurch gebildete Eingangsbereich in den Innenbereich, der im Schließzustand durch den Schließabschnitt verschlossen ist, ermöglicht dann ein hindernisloses Einfügen der Befestigungseinrichtung in den Innenbereich. Anders als bei üblichen Karabinerhaken ist der Schließabschnitt dabei nicht im Weg. Gleiches gilt auch für den Entkoppelungsvorgang des Einhängehakens von der Befestigungseinrichtung. Auch hierbei stellt der Schließabschnitt kein Hindernis dar und kann insbesondere auch ohne vorheriges separates Auslenken durch die aus dem Innenbereich manuell herausgeführte Befestigungseinrichtung ausgelenkt werden.

Besonders bevorzugt ist es, wenn die Hakenbauteile um eine Schwenkachse zueinander verschwenkbar ausgebildet sind und vorzugsweise in ihrer Schwenkstellung aufeinander zu verschwenkt werden. Die Ausbildung der Hakenbauteile als gegeneinander verschwenkbare Bauteile stellt eine besonders einfache Form der Realisierung der Relativbeweglichkeit dar. Im einfachsten Fall ist eine derartige Beweglichkeit schon dadurch realisierbar, dass an einem Hakenbauteil einstückig eine Achse angeformt ist, während das andere Hakenbauteil korrespondierende Bohrungen zur Aufnahme der Achse aufweist. Bevorzugt ist jedoch eine Ausgestaltung, bei der ein separater Achsstift vorgesehen ist, der durch zueinander ausgerichtete Öffnungen beider Hakenbauteile geschoben wird und dieser Lage in axialer Richtung festgelegt wird. Im Falle eines Einhängehakens, bei dem der Schließabschnitt im Öffnungszustand außerhalb des Innenbereichs angeordnet ist, sind die Hakenbauteile derart zueinander beweglich, dass der Schließabschnitt zum Erreichen der Öffnungslage vom Hauptabschnitt weg nach außen verschwenkt wird, so dass er den Öffnungsbereich des Hauptabschnitts freigibt.

Bei einer Weiterbildung der Erfindung ist das Befestigungsmittel am zweiten Hakenbauteil vorgesehen. Diese Ausgestaltung erlaubt, insbesondere bei einer Gestaltung, bei der die Hakenbauteile gegeneinander schwenkbeweglich ausgebildet sind, einen besonders einfachen und vorteilhaften Aufbau, um das automatische Erreichen des Schließzustandes durch Zugbelastung zu erzielen. Schon bei gattungsgemäßen Einhängehaken führen Zugbelastung durch das Zugmittel dazu, dass das erste Hakenbauteil eine nur durch die Zugrichtung bestimmte Ausrichtung einnimmt, die dergestalt ist, dass der Auflagebereich, also der Berührpunkt zwischen Hauptabschnitt und Befestigungseinrichtung, und die Schwenkachse mit der Richtung der Zugkraft fluchten. Durch die Weiterbildung, gemäß der das Befestigungsmittel fest am zweiten Hakenbauteil vorgesehen ist, nimmt das zweite Hakenbauteil durch die Zugkraftbelastung gleichfalls eine definierte Lage ein, die lediglich durch die Position der Schwenkachse und die Richtung der Zugkraft bestimmt wird. Da somit beide Hakenbauteile in eine definierte Lage gebracht werden, die einzig von der Richtung der Zugkraft abhängt, kann durch eine entsprechende Formgebung der beiden Bauteile, insbesondere des Hauptabschnitts und des Schließabschnitts, erreicht werden, dass in dieser definierten Relativlage der Schließzustand erreicht ist.

Besonders bevorzugt ist es, wenn das Ende des Hauptabschnitts und das Ende des Schließabschnitts derart ausgebildet sind, dass sie im Schließzustand in Anlage aneinander gelangen. Dies führt dazu, dass der Innenbereich des Einhängehakens im Schließzustand vollständig und umlaufend geschlossen ist, so dass unabhängig von der Gestaltung der korrespondierenden Befestigungseinrichtung, in die der Einhängehaken eingehängt wird, ein sicherer Halt gewährleistet ist. Der unmittelbare Berührkontakt der Enden ist jedoch nicht zwingend erforderlich. Es reicht für eine Vielzahl von Anwendungen aus, dass die Enden soweit aneinander angenähert sind, dass die Befestigungseinrichtung, in die der Einhängehaken eingeklinkt ist, durch den zwischen den Enden bestehenden Spalt nicht hindurchpasst.

Bei einer Weiterbildung der Erfindung sind Federmittel vorgesehen, die den Hauptabschnitt und den Schließabschnitt in Richtung der Öffnungsstellung kraft- oder momentenbeaufschlagen. Diese Federmittel sind derart ausgelegt, dass in einem Zustand, in dem keine Zugkraft auf den Einhängehaken wirkt, ein automatisches Öffnen des Einhängehakens erfolgt. Bei einer Ausgestaltung, bei der der Einhängehaken derart ausgebildet ist, dass die Hakenbauteile bei Zugkraftbeaufschlagung des Einhängehakens in ihre Schließstellung kraftbeaufschlagt und/oder momentenbeaufschlagt werden, ist diese Kraft- und/oder Momentenbaufschlagung durch die Zugkraft größer als die der Federmittel, so dass gegen die Kraft bzw. das Moment der Federmittel ein Schließen des Einhängehakens erfolgt.

Die Erfindung betrifft weiterhin ein gattungsgemäßes flexibles Flächengebilde für ein Fahrzeug, insbesondere ein Trennnetz, mit mindestens einem Einhängehaken zur Befestigung in einem Fahrzeuginnenraum. Erfindungsgemäß ist dieser Einhängehaken nach oben beschriebener Art ausgebildet.

Besonders bevorzugt ist es, wenn der Einhängehaken an einem mit dem Flächenabschnitt des Flächengebildes verbundenen Gurt vorgesehen ist.

### Kurzbeschreibung der Zeichnungen

Weitere Merkmale und Vorteile der Erfindung ergeben sich außer aus den Ansprüchen auch aus der nachfolgenden Beschreibung eines bevorzugten Ausführungsbeispiels der Erfindung. Dieses wird anhand der Figuren beschrieben. Dabei zeigen:
- Figur 1: die Einzelteile einer Ausführungsform eines erfindungsge- mäßen Einhängehakens,
- Figur 2: den Einhängehaken, dessen Einzelteile in Figur 1 dargestellt sind, in einer Öffnungsstellung und
- Figur 3: den Einhängehaken in einer Schließstellung.

### Detaillierte Beschreibung der Ausführungsbeispiele

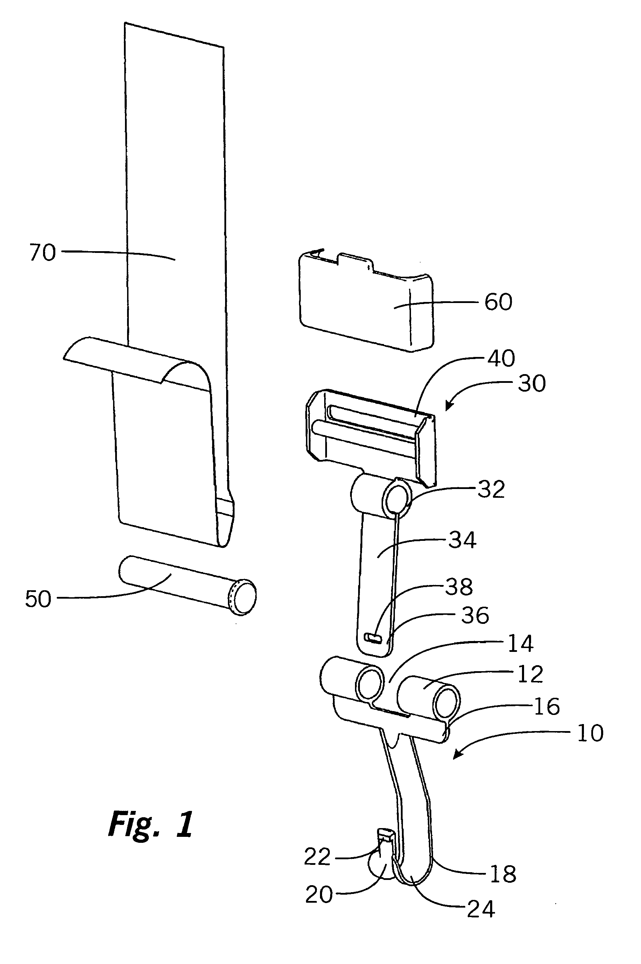

Figur 1 zeigt die Einzelteile eines erfindungsgemäßen Einhängehakens. Der Einhängehaken selbst besteht aus zwei Hakenbauteilen 10, 30, einer Achse 50, mittels derer die Einhängehakenbauteile 10, 30 verbunden werden können, und eine Abdeckschale 60. Der Einhängehaken ist zur Verbindung mit einem als Zugmittel agierenden Gurt 70 ausgebildet.

Das erste Hakenbauteil 10 weist zwei zueinander koaxial ausgebildete und um die Breite eines Aufnahmebereichs 14 voneinander beabstandete Lagerhülsen 12 auf. Die Lagerhülsen 12 sind über einen Verbindungssteg 16 miteinander verbunden, von dem aus sich ein in etwa J-förmiger Hauptabschnitt 18 eines Haltebügels erstreckt. An der Innenseite des Hauptabschnitts 18 befindet sich am tiefsten Punkt ein Auflagebereich 24. Am Ende 20 dieses Haltebügels mündet dieser in einem radial nach außen weisenden Haltefortsatz 22.

Das zweite Hakenbauteil 30 weist ebenfalls eine Lagerhülse 32 auf, wobei diese eine Breite aufweist, die an den Aufnahmebereich 14 des ersten Hakenbauteils 10 angepasst ist. Unterhalb der Lagerhülse 32 schließt sich einstückig angeformt ein gerader Schließabschnitt 34 des Haltebügels an. An dessen unteren Ende 36 ist eine Halteöffnung 38 vorgesehen, die bezüglich ihrer Größe an den Haltefortsatz 22 angepasst ist. Oberhalb der Lagerhülse 32 schließt sich ebenfalls einstückig angeformt ein Befestigungsmittel 40 an, welches als Gurtschnalle 40 zur Aufnahme des Gurts 70 vorgesehen ist.

Die beiden Hakenbauteile 10, 30 können miteinander verbunden werden, indem die Lagerhülsen 32, 12 in eine zueinander fluchtende Ausrichtung gebracht werden und anschließend der Achsstift 50 durch alle drei Lagerhülsen 12, 32 hindurchgeschoben und dann fixiert wird, beispielsweise durch eine Presspassung in der linken der Lagerhülsen 12. Dies führt dazu, dass die Hakenbauteile im montierten Zustand gegeneinander um eine Schwenkachse 52 verschwenkbar sind, wobei der Schließabschnitt 34 sich außerhalb des Innenbereichs des J-förmigen Hauptabschnitts 18 des ersten Hakenbauteils 10 befindet. In diesem montierten Zustand kann der Einhängehaken mittels des Befestigungsmittels 40 mit dem Gurt 70 verbunden werden, wobei die Befestigung des Gurts 70 am Einhängehaken in der bei Gurtschnallen üblichen Art erfolgt. Anschließend kann die Abdeckschale 60 auf die Gurtschnalle 40 aufgerastet werden.

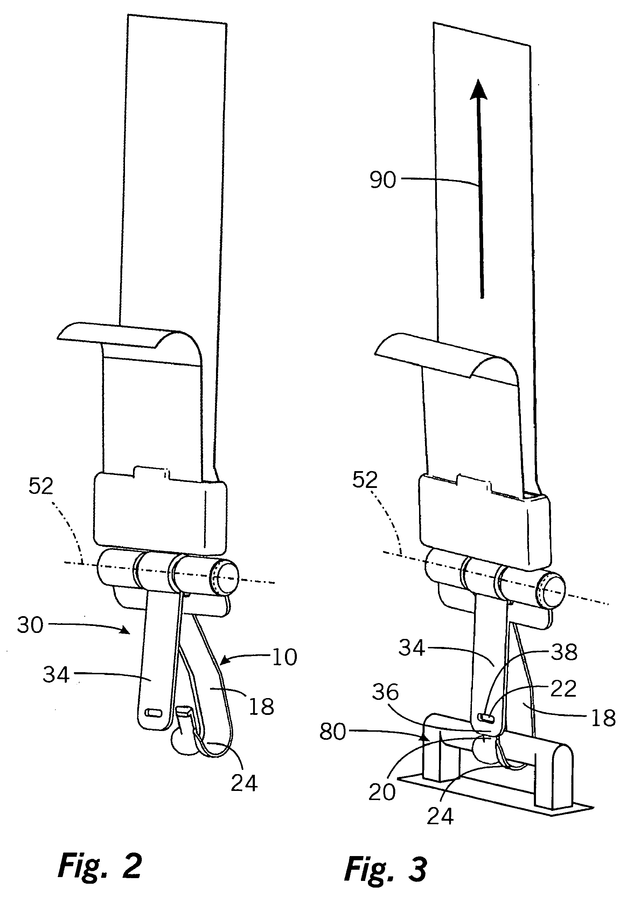

Der fertig montierte Zustand, der hierdurch erreicht wird, ist in Figur 2 dargestellt. Wie zu ersehen ist, können in diesem Zustand die Hakenbauteile 10, 30 frei gegeneinander um die Schwenkachse 52 verschwenkt werden, wobei zumindest zwischen der Ausrichtung des Gurts 70 und der Ausrichtung des ersten Hakenbauteils 10 im dargestellten nicht eingehakten Zustand noch keinerlei Wechselwirkung besteht. Obwohl Fig. 2 nur einen leicht verschwenkten Zustand darstellt, kann das erste Hakenbauteil 10 gegenüber dem Gurt 70 und insbesondere gegenüber dem zweiten Hakenbauteil 30 weit verschwenkt werden, beispielsweise um etwa 90°.

Das zweite Hakenbauteil 30 und insbesondere der Schließabschnitt 34 fluchten jedoch auch schon in diesem Öffnungszustand in etwa mit dem unteren Ende des Gurts 70. Dadurch, dass der Schließabschnitt 34 außerhalb des Innenbereichs des J-förmigen Hauptabschnitts 18 angeordnet ist, können die Bauteile soweit gegeneinander verschwenkt werden, dass der Schließabschnitt 34 keinerlei Hindernis beim Festmachen des Hauptabschnitts 18 an einer Befestigungseinrichtung 80 darstellt.

Eine derartige Kopplung des erfindungsgemäßen Einhängehakens mit einer Befestigungseinrichtung 80 ist in Figur 3 dargestellt. Die Befestigungseinrichtung 80 ist dabei ein beispielsweise in einem Bodenbereich eines Fahrzeugheckraums vorgesehener Einhängebogen 80. Im weit geöffneten Zustand kann der in Figur 2 dargestellte Einhängehaken in diesen Einhängebogen 80 eingeführt werden, so dass der Einhängebogen 80 am im Grund des Hauptabschnitts 18 angeordneten Anlagebereich 24 zum Anliegen kommt. Wenn anschließend, wie in Figur 3 dargestellt ist, eine Zugkraft 90 auf dem Gurt 70 wirkt, richtet sich das erste Hakenbauteil 10 derart aus, dass der Auflageabschnitt 24 und der Achsabschnitt 50 mit der Zugrichtung der Zugkraft 90 fluchten. Gleichzeitig nimmt auch der Schließabschnitt 34 eine durch die Zugrichtung definierte Ausrichtung ein, da er über die einstückige Gestaltung mit der Gurtschnalle 40 unmittelbar an die Ausrichtung des Gurts 70 gekoppelt ist.

Dadurch, dass beim Vorliegen der Zugkraft 90 somit beide Hakenbauteile 10, 30 eine von der Richtung der Zugkraft 90 abhängige Ausrichtung einnehmen, wird der in Figur 3 dargestellte Schließzustand erreicht. In diesem Schließzustand werden das Ende 20 des Hauptabschnitts 18 und das Ende 36 des Schließabschnitts 34 gegeneinander gepresst, wobei der Haltefortsatz 22 in die Halteöffnung 38 eingedrückt wird.

Beim Vorliegen der Zugkraft 90 drückt der Schließabschnitt 34 permanent auf das Ende 20 des Hauptabschnitts 18. Je größer die Zugkraft 90 wird, desto stärker werden die Enden 20, 36 des Hauptabschnitts 18 und des Schließabschnitts 34 gegeneinander gepresst. Ein Herausrutschen des Haltefortsatzes 22 aus der Halteöffnung 38 ist daher nicht zu befürchten. Die Verbindung der beiden Enden 20, 38 der Abschnitte 18, 34 wird umso fest, je größer die Zugkraft 90 wird. Hierdurch wird ein hoher Grad an Sicherheit erzielt.

## Patentansprüche

1. Einhängehaken mit einem vollständig oder annähernd vollständig schließbaren Haltebügel (18, 34), der in einem Schließzustand einen Innenbereich des Einhängehakens umschließt, umfassend
- ein erstes Hakenbauteil (10) mit einem Hauptabschnitt (18) des Haltebügels,
- ein zweites Hakenbauteil (30) mit einem Schließabschnitt (34) des Haltebügels und
- ein Befestigungsmittel (40) zum Verbinden des Einhängehakens mit einem Zugmittel (70),
wobei
- die beiden Hakenbauteile (10, 30) gegeneinander zwischen einer Öffnungsstellung und der Schließstellung relativbeweglich sind, wobei ein Ende (20) des Hauptabschnitts (18) und ein Ende (36) des Schließabschnitts (34) in der Schließstellung in Anlage aneinander gelangen, und
- wobei der Hauptabschnitt (18) einen Anlagebereich (24) aufweist, an dem ein vom Bügel (18, 34) umfasster Einhängeabschnitt (80) anliegt, wenn der Einhängehaken mittels des Zugmittels (70) zugkraftbeaufschlagt wird,
**dadurch gekennzeichnet, dass**
Formschlussmittel (22, 38) am Ende (20) des Hauptabschnitts (18) und am Ende (34) des Schließabschnitts (30) vorgesehen sind, die in der Schließstellung zumindest hinsichtlich der Richtung der Zugkraftbeaufschlagung formschlüssig ineinander greifen.

2. Einhängehaken nach Anspruch 1,
**dadurch gekennzeichnet, dass**
der Einhängehaken derart ausgebildet ist, dass die Hakenbauteile (10, 30) bei Zugkraftbeaufschlagung des Einhängehakens in ihre Schließstellung kraftbeaufschlagt und/oder momentenbeaufschlagt werden.

3. Einhängehaken nach Anspruch 2,
**dadurch gekennzeichnet, dass**
die Kraft- und/oder Momentenbeaufschlagung in Richtung der Schließstellung umso größer wird, je größer die durch das Zugmittel ausgeübte Zugkraft (90) ist.

4. Einhängehaken nach einem der vorstehenden Ansprüche,
**dadurch gekennzeichnet, dass**
der Schließabschnitt (34) im Öffnungszustand außerhalb des Innenbereichs des Einhängehakens angeordnet ist.

5. Einhängehaken nach einem der vorstehenden Ansprüche,
**dadurch gekennzeichnet, dass**
die Hakenbauteile (10, 30) um eine Schwenkachse (52) zueinander verschwenkbar ausgebildet sind und vorzugsweise in ihrer Schließstellung aufeinander zu verschwenkt werden.

6. Einhängehaken nach einem der vorstehenden Ansprüche,
**dadurch gekennzeichnet, dass**
das Befestigungsmittel (40) am zweiten Hakenbauteil (30) vorgesehen ist.

7. Einhängehaken nach einem der vorstehenden Ansprüche,
**dadurch gekennzeichnet, dass**
die Formschlussmittel (22, 38) eine Halteöse (38) am Hauptabschnitt oder am Schließabschnitt (34) und ein zum Eingreifen in die Halteöse (38) vorgesehenen Haltefortsatz (22) am jeweils anderen Abschnitt (18) aufweisen.

8. Einhängehaken nach einem der vorstehenden Ansprüche,
**dadurch gekennzeichnet, dass**
Federmittel vorgesehen sind, die den Hauptabschnitt und den Schließabschnitt in Richtung der Öffnungsstellung kraft- oder momentenbeaufschlagen.

9. Flexibles Flächengebilde für ein Fahrzeug, insbesondere Trennnetz, mit
mindestens einem Einhängehaken zur Befestigung in einem Fahrzeuginnenraum,
**dadurch gekennzeichnet, dass**
der Einhängehaken nach einem der Ansprüche 1 bis 8 ausgebildet ist.

10. Flexibles Flächengebilde für ein Fahrzeug nach Anspruch 9,
**dadurch gekennzeichnet, dass**
der Einhängehaken an einem mit dem Flächenabschnitt des Flächengebildes verbundenen Gurt vorgesehen ist.
